**Europäisches Patentamt**

**European Patent Office**

**Office européen des brevets**

(19)

(11) Veröffentlichungsnummer: **0 062 214**
**A1**

(12) # EUROPÄISCHE PATENTANMELDUNG

(21) Anmeldenummer: **82102340.5**

(22) Anmeldetag: **22.03.82**

(51) Int. Cl.³: **C 03 B 37/09, D 01 D 5/14,
D 01 D 1/04**

(30) Priorität: **02.04.81 DE 3113389**

(43) Veröffentlichungstag der Anmeldung: **13.10.82**
**Patentblatt 82/41**

(84) Benannte Vertragsstaaten: **AT BE CH DE FR GB IT LI LU
NL SE**

(71) Anmelder: **Rheinhold & Mahla GmbH,
Carl-Reiss-Platz 7 - 9, D-6800 Mannheim (DE)**

(72) Erfinder: **Walz, Alfred, Prof. Dr., Am Kurzarm 7,
D-7830 Emmendingen (DE)**

(74) Vertreter: **Bünemann, Gerhard, Dr. et al, BAYER AG c/o
Zentralbereich Patente Marken und Lizenzen,
D-5090 Leverkusen-Bayerwerk (DE)**

(54) **Verteiler für Schmelzen, insbesondere Mineralschmelzen.**

(57) Es wird ein Verteiler (1) für Schmelzen, insbesondere Mineralschmelzen, beschrieben, bei dem sich

a) innerhalb eines die Schmelze enthaltenden Verteilertiegels (1) ein von der Schmelze umspülter Heizleiter (3) befindet,

b) der Heizleiter (3) an seiner Unterseite Zapfen (4) zur Verteilung der Schmelze in eine Vielzahl einzelner Schmelzeströme aufweist und

c) der Heizleiter (3) zumindest mit dem unteren Bereich der Zapfen (4) durch eine bzw. eine Vielzahl an der Unterseite des Verteilertiegels (1) vorgesehenen Öffnung bzw. Öffnungen (2) aus dem Tiegel (1) herausragt.

0062214

Rheinhold & Mahla GmbH                6800 Mannheim

                                      Dp/bc/c

                                      1. April 1981


Verteiler für Schmelzen, insbesondere Mineralschmelzen
_____


Bei der Faserherstellung aus Schmelzen, insbesondere
Mineralschmelzen, tritt die Schmelze im allgemeinen
aus einem Schmelzofen, der gegebenenfalls Vorherde
aufweist, aus und wird in einer im allgemeinen als
Tiegel ausgebildeten Verteilervorrichtung in einzelne
feine Schmelzeströme aufgeteilt. Die einzelnen Schmelzefäden werden danach der eigentlichen Faserziehvorrichtung zugeführt. Für das Ausziehen der Fasern sind die
verschiedensten Verfahren vorgeschlagen worden. Zum
Beispiel können die Schmelzefäden durch Zug ausgezogen
und gleichzeitig erstarrt werden und dann auf eine
Trommel aufgewickelt werden. Dieses Verfahren wird
im allgemeinen zur Herstellung von Endlosfasern eingesetzt. Zur Herstellung von Wirrvliesen ist das
Düsenblasverfahren oder das Zerblaseverfahren neben
anderen bekannt.

Der Verteilertiegel weist im allgemeinen an seiner
Unterseite durchbohrte Nippel auf, durch die die
Schmelze in einzelnen Fäden austritt. Zur Beheizung
des Verteilertiegels hat sich allgemein eine elektrische Beheizung durchgesetzt, wobei die metallischen Wände des Tiegels als Heizleiter fungieren. Die Anforderungen an Konstruktion und Material des Verteilertiegels sind hoch. Der Verteilertiegel muß nämlich zur Herstellung möglichst gleichmäßiger Fasern eine Vielzahl von Schmelzeströmen gleicher Temperatur und von gleichem Massenstrom über längere Zeiträume bereitstellen. Insbesondere bei der Herstellung von Mineralfasern befindet sich der Verteilertiegel auf Schmelzetemperatur von 1200 bis 1800°C und ist damit einem schnellen korrosiven Abtrag ausgesetzt, der die Lebensdauer der Tiegel stark begrenzt. Geringe Temperaturschwankungen innerhalb der Vielzahl der Schmelzeaustrittsöffnungen unterhalb des Tiegels führen zu erheblichen Problemen, z.B. Tropfenbildung und Überflutung benachbarter Schmelzeaustrittsöffnungen.

Aufgabe der vorliegenden Erfindung ist es, diese und andere Nachteile der bekannten Verteiler zu vermeiden.

Gegenstand der vorliegenden Erfindung ist ein Verteiler für Schmelzen, insbesondere Mineralschmelzen, der dadurch gekennzeichnet ist, daß

a)  sich innerhalb eines die Schmelze enthaltenden Verteilertiegels ein von der Schmelze umspülter Heizleiter befindet,

b)  der Heizleiter an seiner Unterseite Zapfen zur Verteilung der Schmelze in eine Vielzahl einzelner Schmelzeströme aufweist und

RM 461

c) der Heizleiter zumindest mit dem unteren Bereich der Zapfen durch eine bzw. eine Vielzahl an der Unterseite des Verteilertiegels vorgesehene Öffnung bzw. Öffnungen aus dem Tiegel herausragen.

Der Verteilertiegel hat im allgemeinen die Form eines langestreckten Schiffchens, an dessen Unterseite die Schmelzeströme eine linear angeordnete Reihe bilden. Der Heizleiter erstreckt sich in Längsrichtung durch das ganze Schiffchen oberhalb der Reihe der Schmelzeströme. Er kann in Form eines Metallbleches ausgebildet sein. Das Schiffchen kann an seiner Unterseite einen Schlitz als gemeinsame Schmelzeaustrittsöffnung für alle Schmelzefäden aufweisen, durch den der Heizleiter aus dem Schiffchen herausragt. An der Unterkante des Heizleiters sind Zapfen oder Spitzen angebracht. Die Schmelze fließt beidseitig des Heizleiters durch den Schlitz am Heizleiter entlang und umspült diesen einschließlich der Zapfen vollständig. Die Zapfen sollen durch ihre Formgebung und ihren Abstand ein getrenntes Herabfließen der Schmelze begünstigen, so daß ein Überfluten der Zwischenräume zwischen den Zapfen vermieden wird. Da der Heizleiter einschließlich der Zapfen von der Schmelze vollständig umspült wird, kommt dieser nicht in Kontakt mit der Umgebungsluft, so daß eine Oxidation des Heizleitermetalls verhindert wird. Dies erlaubt den Einsatz von Nicht-Edelmetallen, z.B. Molybdän oder geeigneter Molybdän-Legierungen.

RM 461

Der langgestreckte Verteilertiegel kann aber auch einzelne Durchflußöffnungen an seiner Unterseite aufweisen, wobei durch je eine Durchflußöffnung ein Heizleiterzapfen aus dem Schiffchen herausragt. Die Aufteilung in Einzelschmelzeströme erfolgt dabei durch die einzelnen Öffnungen im Tiegelboden. Die Überflutung des Tiegelbodens wird durch die Zapfen, an denen die Schmelze herabläuft, vermieden. Konstruktiv aufwendige Nippel an den Ausflußöffnungen zur Vermeidung der Überflutung, wie nach dem Stand der Technik üblich, sind nicht notwendig.

Wesentlich im Sinne der vorliegenden Erfindung ist, daß Heizleiter und Zapfen aus einem Materialstück gefertigt sind, so daß ein optimaler Wärmekontakt zwischen Heizleiter und Zapfen besteht. Dadurch wird ein zu schnelles Abkühlen der Schmelze nach ihrem Austritt aus dem Verteilertiegel verhindert. Dies ist insbesondere von Bedeutung, wenn Mineralschmelzen mit engem Schmelzbereich, d.h. mit starkem Viskositätsanstieg in einem kleinen Temperaturintervall, zu Fasern ausgezogen werden sollen.

Der Verteilertiegel selbst kann aus jedem geeigneten Material bestehen. Für die Aufteilung von Mineralschmelzen kann z.B. ein Verteilertiegel aus Platin oder Platin/Rhodium-Legierungen eingesetzt werden. In diesem Fall ist es zweckmäßig, den Tiegel selbst zusätzlich mit einem Heizstrom zu beaufschlagen. Vorzugsweise besteht der Verteilertiegel jedoch aus

RM 461

einem geeigneten keramischen Material, das von der Mineralschmelze nicht angegriffen wird. Für viele Mineralschmelzen ist z.B. Degussit (Warenzeichen der Degussa) geeignet. Der Fachmann ist in der Lage, für jede Mineralschmelze die geeigneten Keramikmaterialien auszuwählen. Zum Beispiel stehen die aus der Glasschmelzofentechnologie bekannten Materialien zur Verfügung.

Das Ausziehen der Einzelschmelzefäden zu Fasern kann in beliebiger Weise erfolgen. Zum Beispiel kann das Trommelziehverfahren angewandt werden. Zur Herstellung von Wolle wird vorzugsweise das Düsenblasverfahren eingesetzt.

Der erfindungsgemäße Verteiler ist insbesondere für die Herstellung von Steinwolle unter Einsatz von Cupolöfen geeignet. Bekanntlich enthalten solche Steinschmelzen die in Kupolöfen geschmolzen wurden, metallisches Eisen, das mit Edelmetallen legiert, so daß diese für die Herstellung von Verteilern für Kupolofenschmelzen weniger geeignet sind.

Die vorliegende Erfindung wird anhand der angefügten Zeichnungen näher erläutert.

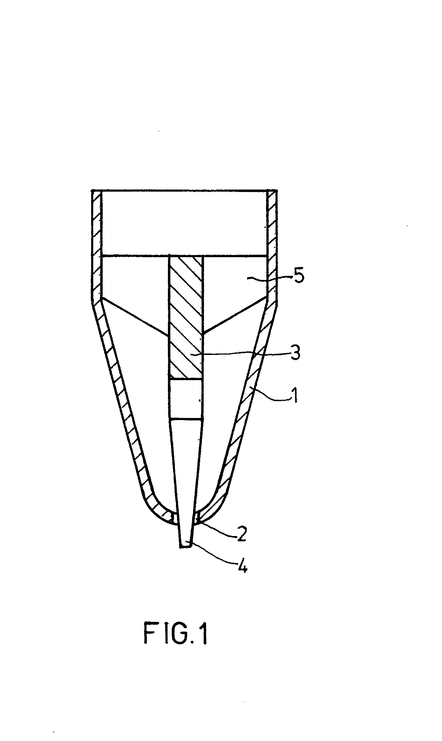

Figuren 1, 2 und 3 zeigen 3 verschiedene Ansichten einer Ausführungsform der vorliegenden Erfindung.

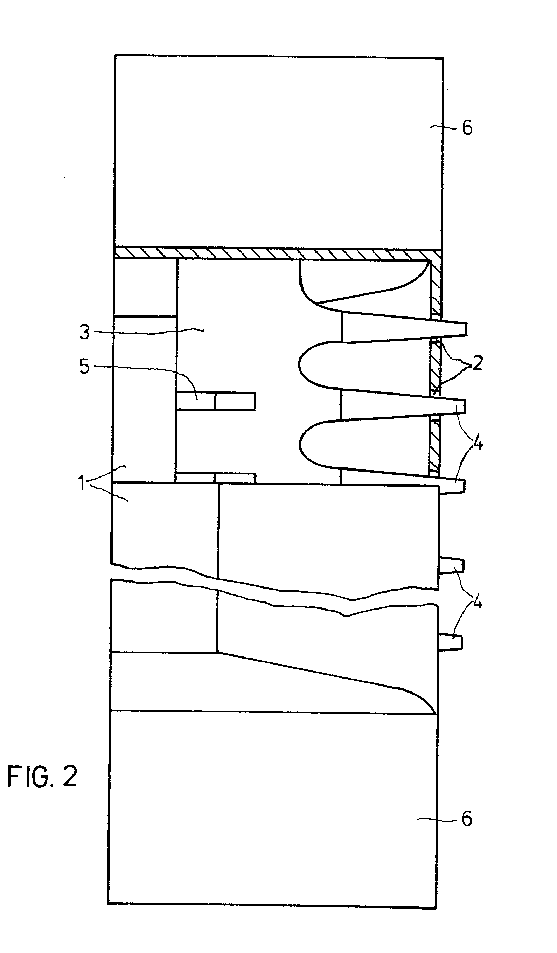

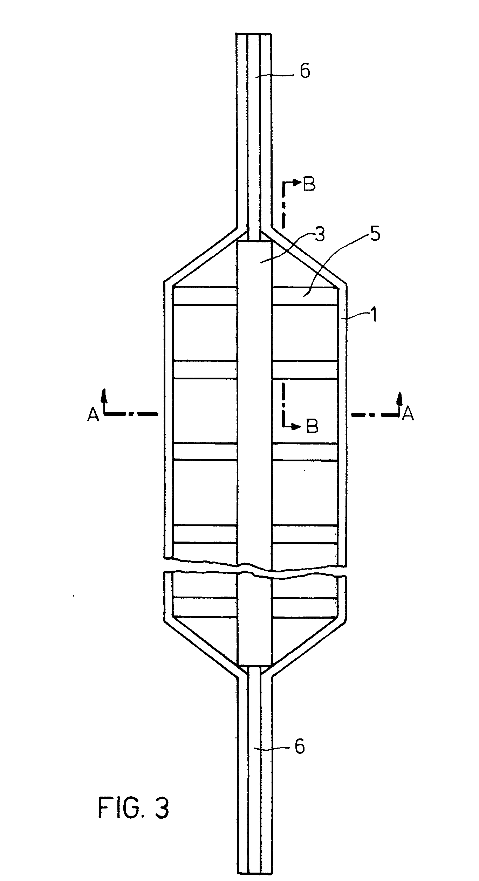

Fig. 1 zeigt einen senkrechten Querschnitt durch den Verteiler entlang der Linie A-A in Fig. 3; Fig. 2 zeigt eine teilweise entlang der Linie B-B der Fig. 3 aufgeschnittene Seitenansicht und Fig. 3 eine Aufsicht des Verteilers. Gleiche Ziffern in den Figuren bezeichnen

RM 461

gleiche Elemente. Der Tiegel 1 weist an seiner Unterseite Bohrungen 2 auf. Innerhalb des Tiegels 1 ist der Heizleiter 3 in Längsrichtung angeordnet. Der Heizleiter 3 weist an seiner Unterseite Zapfen 4 auf, die durch die Bohrungen 2 aus dem Tiegel herausragen. Die Stromzuführung erfolgt über "Ohren" 6, die als Fortsetzungen des Heizleiters 3 und der Seitenwände des Tiegels 1 dreischichtig ausgebildet sind. Der Heizleiter 3 weist ferner mit diesem verschweißte Querverstrebungen 5 auf, die mit den Seitenwänden des Tiegels 1 vorzugsweise nicht verschweißt sind.

Zur Verteilung von Mineralschmelzen kann der Verteiler vollständig aus Platin oder Platin/Rhodium-Legierungen gefertigt sein. Vorzugsweise wird zumindest der Heizleiter 3 mit den Zapfen 4 aus einem hochtemperaturbeständigen Nicht-Edelmetall gefertigt.

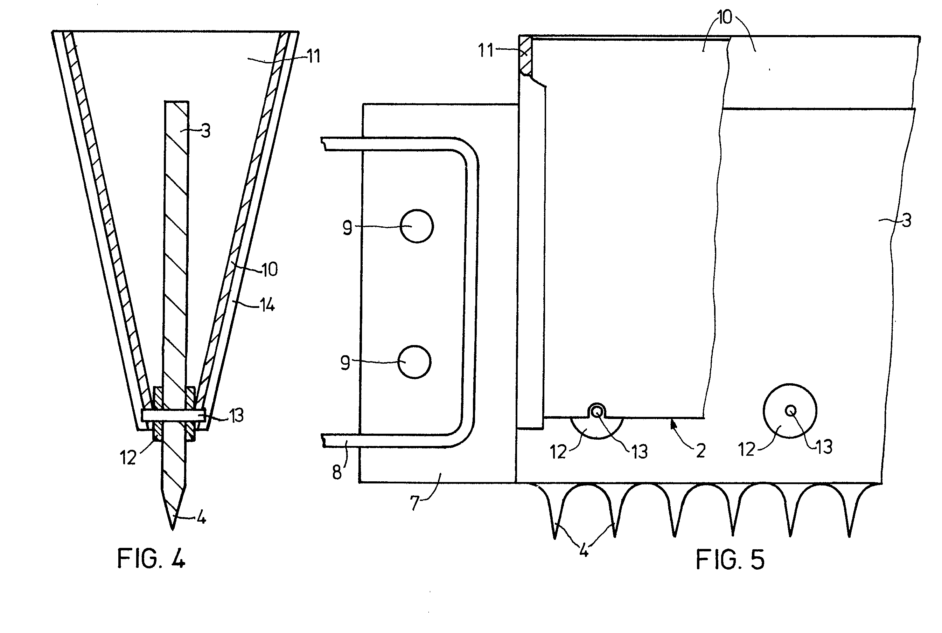

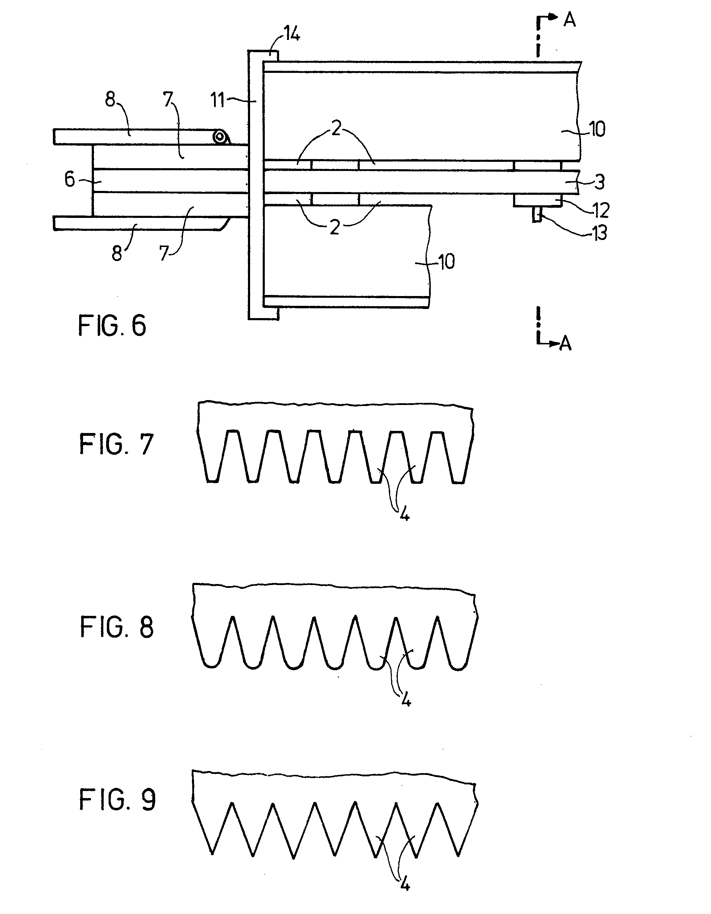

Die Fig. 4, 5 und 6 zeigen analoge Ansichten einer weiteren Ausführungsform des erfindungsgemäßen Verteilers. Der hier dargestellte Verteiler besteht aus einem zentral angeordneten Heizleiter 3, der an seiner Unterkante Zapfen 4 aufweist. Der Heizleiter 3 mit Zapfen 4 besteht vorzugsweise aus Molybdänblech. Der Verteilertiegel wird um den Heizleiter herum aus Keramikplatten (vorzugsweise Degussit; Warzenzeichen der Fa. Degussa) aufgebaut. Er besteht aus 2 Seitenplatten 10, sowie Stirnplatten 11. Die Seitenplatten werden an der Unterseite über Abstandsstücke 12 sowie Stifte 13 gehalten, so daß beidseitig des Heizleiters 3 schlitzförmige Schmelzedurchlaßöffnungen 2 gebildet werden.

RM 461

Die Stirnplatten 11 weisen eine schlitzförmige Aussparung auf, so daß sie über dem Heizleiter 3 gesteckt werden können. Ferner weisen die Stirnplatten 11 an ihren Außenkanten Vorsprünge 14 zur Halterung der Seitenwände 10 auf. Die Fortsetzung 6 des Heizleiters 3 außerhalb des Tiegels wird zwischen Kupferplatten 7 eingespannt und bildet die "Ohren" für die Stromzuführung. Die Ohren sind über auf die Kupferplatten 7 aufgelötete Kühlröhren 8 wassergekühlt. Der lediglich aus den Seitenwänden 10 und den Stirnwänden 11 zusammengesteckte Tiegel dichtet sich selbsttätig, da in gegebenenfalls vorhandene Spalte Mineralschmelze eintritt und erstarrt.

Der in den Fig. 4, 5 und 6 dargestellte Verteiler wird vorzugsweise bei der Steinwolleherstellung nach dem Düsenblasverfahren im Zusammenhang mit einem Kupolofen eingesetzt.

In den Fig. 7, 8 und 9 sind alternative Ausbildungen der Zapfen 4 an der Unterseite des Heizleiters 3 dargestellt. Es ist zweckmäßig, die günstigste Form der Zapfen, die eine bestmögliche Aufteilung der Schmelze in Einzelfäden gewährleistet, in Versuchen festzustellen. Je nach Art der Schmelze sind die verschiedenen alternativen Zapfenformen unterschiedlich geeignet. Die jeweils zu berücksichtigenden Einflußgrößen sind das Temperatur-Viskositätsverhalten der Schmelze, die Schmelztemperatur und das Wärmeabstrahlungsverhalten der Schmelze, sowie der im Hinblick auf den gewünschten Faserdurchmesser einzustellende Massenstrom je Schmelzefaden.

RM 461

0062214

Patentansprüche

1) Verteiler für Schmelzen, insbesondere Mineralschmelzen, dadurch gekennzeichnet, daß

   a) sich innerhalb eines die Schmelze enthaltenden
      Verteilertiegels ein von der Schmelze umspülter
      Heizleiter befindet,

   b) der Heizleiter an seiner Unterseite Zapfen zur
      Verteilung der Schmelze in eine Vielzahl einzelner Schmelzeströme aufweist und

   c) der Heizleiter zumindest mit dem unteren Bereich der Zapfen durch eine bzw. eine Vielzahl
      an der Unterseite des Verteilertiegels vorge-
      sehenen Öffnung bzw. Öffnungen aus dem Tiegel
      herausragt.

2) Verteiler nach Anspruch 1, dadurch gekennzeichnet,
   daß der Verteilertiegel aus einem gegen die Schmelze
   beständigen keramischen Material besteht.

3) Verteiler nach Anspruch 1 oder 2, dadurch gekennzeichnet, daß der Heizleiter aus Molybdän bzw.
   geeigneten Molybdänlegierungen besteht.

4) Verwendung des Verteilers nach einem der Ansprüche
   1 bis 3 zur Herstellung von Steinwolle in Verbindung mit Kupolöfen.

RM 461

FIG.1

FIG. 2

FIG. 3

FIG. 5

FIG. 4

0062214

5/5

FIG. 6

FIG. 7

FIG. 8

FIG. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|-----------|-----------------------------------------------------------------------------------|-------------------|-------------------------------------------|
| X | GB-A- 519 053 (NAAMLOZE VENNOOTSCHAP MAATSCHAPPIJ TOT BEHEER EN EXPLOITATIE VAN OCTROOIEN) * Figuren 1,2,6; Seiten 1,2 * | 1,2 | C 03 B 37/09 D 01 D 5/14 D 01 D 1/04 |
| X | GB-A- 511 857 (POLLAK) * Insgesamt * | 1,2 | |

RECHERCHIERTE SACHGEBIETE (Int. Cl. ³)

C 03 B 7/00
C 03 B 37/00
D 01 D 5/00
D 01 D 1/00

Der vorliegende Recherchenbericht wurde für alle Patentansprüche erstellt.

| Recherchenort | Abschlußdatum der Recherche | Prüfer |
|---------------|----------------------------|--------|
| DEN HAAG | 13-07-1982 | VAN DEN BOSSCHE W.L. |